# EUROPEAN PATENT APPLICATION

(11) **EP 4 105 648 A1**
(43) Date of publication of application: **21.12.2022**
(21) Application number: 22000142.4
(22) Date of filing: 27.05.2022
(51) Int. Cl.: G01N 21/95, G01B 11/10, G01B 11/24, G01N 21/952

(54) **QUICK INSPECTION SYSTEM OF A SERIES OF FIXING DEVICES THROUGH A MULTI-CAMERA SIDE VISION DEVICE AND QUICK INSPECTION PROCESS USING ARTIFICIAL VISION TECHNIQUES**

(30) Priority: 18.06.2021 IT 202100015962
(71) Applicant: Romano, Francesco, 20090 Cesano Boscone (MI) (IT)
(72) Inventor: Romano, Francesco, 20090 Cesano Boscone (MI) (IT)
(74) Representative: Garavelli, Paolo

(57) **Abstract**

A system of a series of fastening devices (1) having a head and a shank is described, the system comprising feeding means (2) with positioning means (3) of the series of fastening devices (1), at least one side vision apparatus (4) operable to capture at least one image of each fixing device (1) by means of at least one camera (5), (6), (7), (8), and an image analyzer (13). Also described is a side vision apparatus (4) consisting of a plurality of cameras (5), (6), (7), (8), in which each camera is aggregated with at least one image reflection medium (9), (10), (11), (12), to allow the simultaneous capture of a series of specifically oriented images of the same fixing device (1). Additionally, a quick inspection method of a series of fasteners is disclosed.

## Description

The present invention relates to a system and a method for the quick inspection of a series of fastening devices.

Furthermore, the present invention relates to a side view apparatus of a series of fastening devices.

In general, the present invention relates to: inspection of the external surface of cylindrical bodies or screws; dimensional measurement with artificial vision means; complex shaped objects, video scanning; industrial image inspection.

US patent 7,364,043 B2 relates to a high speed fastener inspection system for performing 100% inspection of various geometric features and for sorting a large number of fastening devices at high speed, comprising a rotary table having an external periphery, an internal periphery and a plurality of radial slots extending from the external periphery to the internal periphery; at least one visual inspection camera is provided to capture the image of each fastener after each fastener has been positioned in a radial slit; an image analyzer is operably connected to the visual inspection camera to analyze the captured image and to determine if the fastener is defective; once the defective fastener has been identified by the image analyzer, the sorting mechanism is activated to remove the defective fastening device from the rotary table.

The inspection equipment includes two side view inspection cameras and one top surface inspection camera, and a backlight assembly is provided for the side view inspection cameras.

The side view inspection cameras and the top surface inspection camera are operationally connected to an image processing computer to analyze the captured images; the computer has the inspection criteria for acceptable fasteners pre-stored in its memory; the inspection criteria for the fastener side view include: head height, head diameter, shank length, thread pitch, bottom fill, over one pitch and other programmable dimensions. From the side view images captured, the actual dimensions of the fasteners can be obtained. The computer compares the actual dimensions to the pre-stored inspection criteria, then determines if the fasteners are defective. For inspection of the top surface, cracks, contamination and concentricity can be determined.

KR-B1-10-1067647 relates to a crack inspection device for the head side of the precision screw thread, which is installed near the turntable to be inspected when the transported screw continuously reaches the correct position of the inspection position; the image is incident and reflected on a polygon mirror reflector installed in the upper center of the fixing plate, focusing the image refracted upward by the mirror reflector as a convex lens and photographing the focused image with the camera on the top side; the existing inspection device photographs and reads each part by installing a plurality of cameras displaying the presence or absence of cracks on the side of the screw head on a monitor using the captured signal to determine if it is good or bad. By displaying the presence or absence of cracks on the side of the screw head on a single monitor to determine whether it is good or bad based on this, the installation space is increased compared to the existing inspection apparatus which photographs and reads each part by installing multiple cameras.

US-B1-6,959,108 relates to an inspection system: the pieces to be inspected are launched consecutively and automatically to pass unsupported through the field of view of a plurality of cameras; when a workpiece passes through the field of view of the cameras, a sensor communicates with a computer system to trigger cameras to capture a free image, or image data, of the workpiece; the image data is then analyzed by a computer program to see if the image data indicates that the workpiece does not meet the established criteria and therefore is considered defective; if the image does not meet the established criteria, the piece is discarded and separated from the pieces that have not been identified as defective.

The number and placement of cameras used to obtain the necessary images will depend on a number of factors including the shape of the object being inspected, the type and size of the defect or feature to be detected or analyzed, and the degree of accuracy required. For example, obtaining a complete circumferential view of a cylindrical object or workpiece around a single axis generally requires the use of at least three cameras which are preferably mounted on the same plane, spaced at an equal distance from the object to be inspected. and at an equal distance from each other.

A controller is further programmed to analyze workpiece images captured by cameras to determine the relative size of any additional openings in the workpiece and determine if the size of each additional opening conforms to a certain acceptable size standard for additional openings.

In the screw manufacturing industry, there is a need to verify production.

In some sectors, such as the automotive one, the check is done 100%.

In fastener sorting machines, a feed system positions each body in successive measuring stations. There may be mechanical, visual or other control stations.

One of the controls requires the edge-to-edge measurement of the polygonal head. In order to carry out the measurement in a certain position it is necessary that the screw reaches the right rotation in front of the camera.

This is achieved with a wheel-edges, that is a mechanical component that comes into contact with the head of the screw and the wheel.

The technical problem to be solved is that the contact technology, subject to wear, requires specific skills for calibration and has speed limitations.

The solution to this problem is observing the screw head from multiple angles of rotation, for example four.

To keep the group of cameras compact, mirrors are used; by acquiring four images rotated by 15°, it is possible to carry out the measurement with an accuracy of approximately 95%.

Object of the present invention is solving the aforesaid prior art problems by providing a quick inspection system of a series of fastening devices which is simple to install, and easily connectable to a discrete measurement interpolation calculation system.

A further object is providing a side vision apparatus for a series of fastening devices which can be easily installed on board an existing system.

A further object is providing a process capable of measuring a value at the apex of the size of the head of each fastening device.

The aforementioned and other objects and advantages of the invention, which will appear from the following description, are achieved with a quick inspection system of a series of fastening devices, and a quick inspection process of a series of fastening devices, as described in the respective independent claims.

Preferred embodiments and non-trivial variations of the present invention are the subject matter of the dependent claims.

It is understood that all attached claims form an integral part of the present description.

It will be immediately obvious that innumerable variations and modifications (for example relating to shape, dimensions, number of video cameras, arrangements and parts with equivalent functionality) can be made to what is described, without departing from the scope of the invention as appears from the attached claims.

The present invention will be better described by some preferred embodiments, provided by way of nonlimiting example, with reference to the attached drawings, in which:

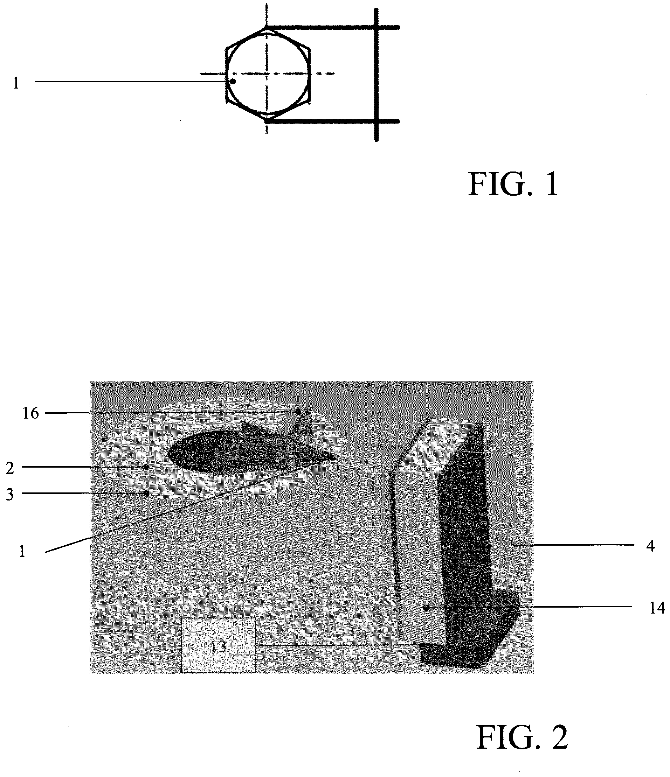

- FIG. 1 shows a plan view of the device of a series of fastening devices according to the present invention;
- FIG. 2 shows a subset of an embodiment of the quick inspection system of a series of fasteners according to the present invention;

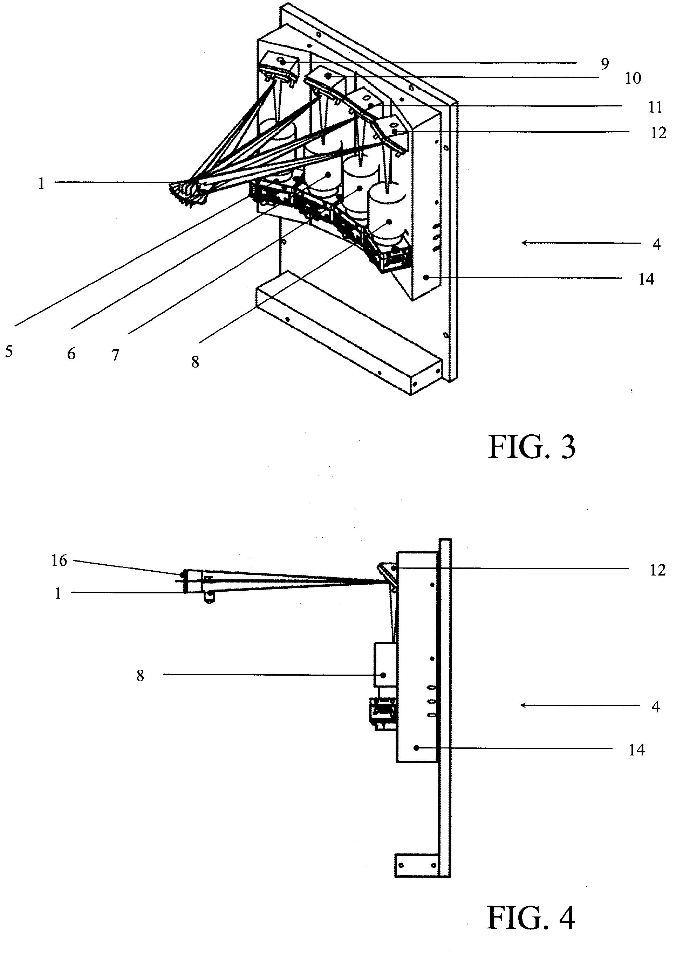

- FIG. 3 shows a perspective view of a further subset of an embodiment of the quick inspection system of a series of fastening devices according to the present invention;

- FIG. 4 shows a front view of the sub-assembly of the previous figure;

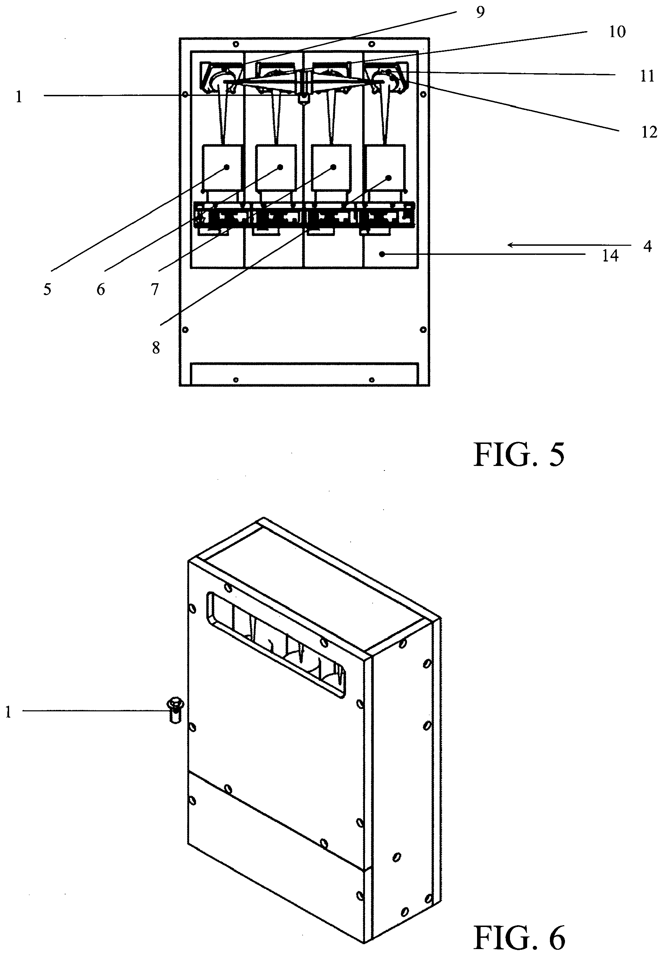

- FIG. 5 shows a side view of the subset of FIG. 3; and
- FIG. 6 shows the subset of FIG. 3 with a casing.

With reference to the Figures, it can be noted that the present invention relates to a quick inspection system of a series of fastening devices 1, each of such fastening devices having a head and a shank.

The system comprises feeding means 2 with positioning means 3 for each device of the series of fastening devices 1, at least one side vision apparatus 4 operable to capture at least one image of each fastening device 1 by means of at least one video camera 5, 6, 7, 8, and an image analyzer 13 operatively connected to the lateral vision apparatus 4 for analyzing the captured images and carrying out measurements on the fixing device placed in the measuring position.

Advantageously, the side vision apparatus 4 consists of a plurality of cameras 5, 6, 7, 8, each camera of the plurality of cameras 5, 6, 7, 8 being aggregated with at least one image reflection means 9, 10, 11, 12 to allow simultaneously capturing a series of specifically oriented images of the same fixing device 1.

By means of the image analyzer 13, a specifically oriented lateral image of the same fixing device 1 of each camera of the plurality of cameras 5, 6, 7, 8 allows interpolating a value at the apex of the size of the head of the same device fixing 1.

The image reflection means 9, 10, 11, 12 are arranged so that the side image of the same fixing device 1 of each camera of the plurality of cameras 5, 6, 7, 8 is oriented radially with respect to the same fixing device 1.

Preferably, the cameras 5, 6, 7, 8 are four in number, while the image reflection means 9, 10, 11, 12, radially oriented, are spaced with an angular opening of 15°.

Each camera of the plurality of cameras 5, 6, 7, 8 lies with the optical axis parallel to the longitudinal axis of the fixing device 1.

The present invention also relates to a side vision apparatus of a series of fixing devices consisting of a plurality of cameras 5, 6, 7, 8, each camera of said plurality of cameras 5, 6, 7, 8 being aggregated with at least one image reflection means 9, 10, 11, 12, so as to capture a specifically oriented image of the same fixing device 1 by means of support and interface means 14.

The support and interface means 14 consist of a perforated plate equipped with adjustment slides.

The present invention also relates to a quick inspection method of a series of fasteners, each of such fasteners having a head and a shank.

Such a method is carried out by means of a system comprising feeding means 2 with positioning means 3 for each device of the series of fastening devices, at least one side vision apparatus 4 which can be operated to capture at least one image of each fastening device 1 by means of a plurality of cameras 5, 6, 7, 8, each camera of the plurality of cameras 5, 6, 7, 8 being rotated with respect to the axis of the fixing device 1 and being aggregated with at least one image reflection means 9, 10, 11, 12, an image analyzer 13 operatively connected to the lateral vision apparatus 4. The process according to the present invention comprises, in particular, the following steps:
- through each camera of the plurality of cameras 5, 6, 7, 8, capturing a specifically oriented image of the same fixing device 1;
- using the image analyzer 13, interpolating a value at the apex of the size of the head of the same fastening device 1;
- using a processor connected to a memory (not shown), comparing the value interpolated in the previous phase with that in memory;
- based on the result of the comparison in the previous step, identifying the defective fastener, to remove any defective fasteners from the rotary table 2; and
- carrying out the cataloging of the defective fastening device.

The process may further comprise a step of determining an edge-to-edge measurement of a hexagonal head of a series of fasteners 1.

A computer program according to the invention comprises computer program code means adapted to carry out all or part of the steps of the process, when such program is executed on a computer and/or when such program is contained on a medium readable by a computer.

An advantage of the system of the invention is represented by the fact that both a front positioning and a predefined orientation of the fixing device to be measured are not required.

The side vision apparatus 4 consists of a plurality of cameras 5, 6, 7, 8, and each camera of the plurality of cameras 5, 6, 7, 8 observes the component to be measured along an inclined direction with respect to the remaining cameras so as to have a plurality of images. In order to keep the group of cameras compact, image reflection elements 9, 10, 11, 12 can be integrated for each camera.

Through the image analyzer 13, it is possible to analyze all images of the cameras 5, 6, 7, 8 so as to be able to have different frames of the fixing device 1 to be measured. In particular, it is possible to measure the diagonal of a polygonal section, i.e. the value at the apex of the size of the head of the fastener 1.

The reflection means of the image 9, 10, 11, 12, in addition to being arranged radially with respect to the same fixing device 1, lie along the optical path allowing to keep the system compact.

A backlight assembly 16 is provided for the side view inspection cameras.

## Claims

1. Quick inspection system of a series of fastening devices (1), each fastening device having a head and a shank, the system comprising feeding means (2) with positioning means (3) of each device of the series of fastening devices (1), at least one side view apparatus (4) operable to capture at least one image of each fastening device (1) via at least one camera (5), (6), (7), (8), an image analyzer (13) operatively connected to said lateral vision apparatus (4) to analyze the captured images and carry out measurements, said lateral vision apparatus (4) consisting of a plurality of cameras (5), (6), (7), (8), each camera of said plurality of cameras (5), (6), (7), (8) being aggregated with at least one image reflection medium (9), (10), (11), (12) to allow simultaneously capturing a series of specifically oriented images of the same fixing device (1), said system **characterized in that**, through the image analyzer (13), a specifically oriented side image of the same fixing device (1) of each camera of said plurality of cameras (5), (6), (7), (8) allows interpolating a value at the apex of the size of the head of the same fastening device (1).

2. System according to the preceding claim, **characterized in that** the cameras (5), (6), (7), (8) are four in number, while the image reflection means (9), (10), (11), (12), radially oriented, are spaced with an angular opening of 15°.

3. Process of rapid inspection of a series of fastening devices, each fastening device having a head and a shank, by means of a system comprising feeding means (2) with positioning means (3) of each device of the series of fastening devices fixing device (1), at least one side vision apparatus (4) operable to capture at least one image of each fixing device (1) by means of a plurality of cameras (5), (6), (7), (8), each camera of said plurality of cameras (5), (6), (7), (8) being rotated with respect to the axis of the fixing device (1) and being aggregated with at least one image reflection means (9) , (10), (11), (12), an image analyzer (13) operatively connected to said lateral vision apparatus (4), said method being **characterized in that** it comprises the following steps:
- through each camera of said plurality of cameras (5), (6), (7), (8), capturing a specifically oriented image of the same fixing device (1);
- using said image analyzer (13), interpolating a value at the apex of the size of the head of the same fastening device (1);
- by means of a processor connected to a memory, comparing the value interpolated in the previous phase with that in the memory;
- based on the result of the comparison in the previous step, identifying the defective fastener; and
- carrying out the cataloging of the defective fastening device.

4. Process according to the preceding claim, **characterized in that** it comprises a step for determining an edge-to-edge measurement of a hexagonal head of a series of fastening devices (1) .

5. Computer program comprising computer program code means adapted to carry out all or part of the steps of said method according to any one of claims 3, 4, when said program is executed on a computer and/or when said program is contained on a medium that can be read by a computer.
